# EUROPEAN PATENT APPLICATION

(11) **EP 4 723 251 A1**
(43) Date of publication of application: **08.04.2026**
(21) Application number: 24811116.3
(22) Date of filing: 21.05.2024
(51) Int. Cl.: H01M 6/14, H01M 4/40, H01M 4/50, H01M 4/134

(54) **LITHIUM PRIMARY BATTERY**

(30) Priority: 25.05.2023 JP 2023086402
(71) Applicant: Panasonic Intellectual Property Management Co., Ltd., Kadoma-shi, Osaka 571-0057 (JP)
(72) Inventor: OKAMOTO, Taiju, Kadoma-shi, Osaka 571-0057 (JP); NISHIMURA, Naoaki, Kadoma-shi, Osaka 571-0057 (JP); KAWAHARA, Yusuke, Kadoma-shi, Osaka 571-0057 (JP)
(74) Representative: Novagraaf International SA
(86) International application number: PCT/JP2024/018691
(87) International publication number: WO 2024/242109

(57) **Abstract**

A lithium primary battery includes a positive electrode, a negative electrode, a separator disposed between the positive electrode and the negative electrode, and a nonaqueous electrolyte solution. The positive electrode includes manganese dioxide, and the negative electrode includes a lithium alloy. The lithium alloy contains magnesium in an amount of 0.02 mass% or more and 11 mass% or less. A ratio N/P of a capacity N of the negative electrode to a capacity P of the positive electrode is 0.85 or more and 1.00 or less.

## Description

### [Technical Field]

The present disclosure relates to a lithium primary battery.

### [Background Art]

Lithium primary batteries have high energy density and low self-discharge, and are therefore used as power sources for many electronic devices. A lithium primary battery includes a positive electrode, a negative electrode, a separator disposed between the positive electrode and the negative electrode, and a nonaqueous electrolyte solution. For the positive electrode, manganese dioxide and the like are used. For the negative electrode, for example, lithium metal or lithium alloy in the form of sheet (foil) is used.

Patent Literature 1 discloses "a nonaqueous electrolyte solution battery, comprising: a spirally wound electrode group which includes a belt-shaped negative electrode made of a light metal, a belt-shaped positive electrode including a current collector and a positive electrode mixture supported on the current collector, and a separator separating the positive and negative electrodes from each other; and a cylindrical case housing the electrode group, wherein the positive electrode plate has a strip-shaped insulator attached to a surface thereof in a longitudinal direction". Patent Literature 1 discloses "the ratio of the theoretical capacity of the positive electrode active material to the theoretical capacity of the negative electrode being in a range of 1:0.9 to 1.1."

Patent Literature 2 discloses "a nonaqueous electrolyte solution battery with a cylindrical shape, comprising: an electrode wound body including a sheet-shaped positive electrode and a sheet-shaped negative electrode which are wound with a separator interposed therebetween; and a bottomed cylindrical outer can having an upper opening and housing the electrode wound body and a nonaqueous electrolyte solution, wherein the negative electrode includes a metal foil as a current collector, and metal lithium or lithium alloy is disposed on both sides or one side of the metal foil, the metal lithium or lithium alloy is pressure-bonded partially or not at all to the metal foil, and a ratio of a negative electrode capacity to a positive electrode capacity is 0.93 to 1.03".

### [Citation List]

### [Patent Literature]

Patent Literature 1: Japanese Laid-Open Patent Publication No. H9-134729
Patent Literature 2: Japanese Laid-Open Patent Publication No. 2005-149961

### [Summary of Invention]

### [Technical Problem]

In the end stage of discharge, the output characteristics may degrade in some cases due to the deterioration of the positive electrode. Furthermore, during long-term use of the battery, the internal resistance may increase in some cases due to the deposition of the Mn which has leached from the positive electrode, on the negative electrode.

### [Solution to Problem]

One aspect of the present disclosure relates to a lithium primary battery, including: a positive electrode; a negative electrode; a separator disposed between the positive electrode and the negative electrode; and a nonaqueous electrolyte solution, wherein the positive electrode includes manganese dioxide, the negative electrode includes a lithium alloy, the lithium alloy contains magnesium in an amount of 0.02 mass% or more and 11 mass% or less, and a ratio N/P of a capacity N of the negative electrode to a capacity P of the positive electrode is 0.85 or more and 1.00 or less.

### [Advantageous Effects of Invention]

According to the present disclosure, it is possible to suppress the degradation in output characteristics in the end stage of discharge, and suppress the increase in internal resistance during long-term use.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

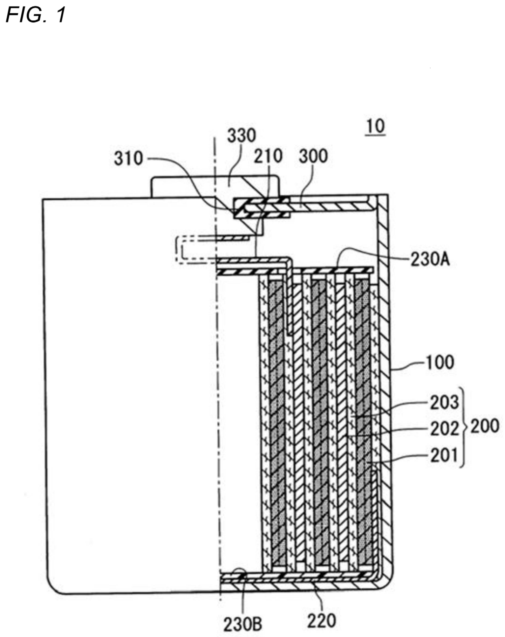

[FIG. 1] A front view, partially in sectional, of a lithium primary battery according to an embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

A lithium primary battery according to an embodiment of the present disclosure includes an electrode group, and a nonaqueous electrolyte solution. The electrode group includes a positive electrode, a negative electrode, and a separator disposed between the positive electrode and the negative electrode. The positive electrode includes manganese dioxide as a positive electrode active material. The negative electrode includes a lithium alloy as a negative electrode active material. The lithium alloy contains magnesium in an amount of 0.02 mass% or more and 11 mass% or less. A ratio N/P of a capacity N of the negative electrode to a capacity P of the positive electrode is 0.85 or more and 1.00 or less.

The electrode group may be of a wound type. That is, the positive electrode having a belt shape and the negative electrode having a belt shape may be spirally wound with the separator interposed therebetween. The electrode group may be of a stacked type. That is, the positive electrode and the negative electrode may be stacked with the separator interposed therebetween.

By setting the N/P ratio to 1 or less, the depth of discharge of the positive electrode (the ratio of the discharged quantity of electricity relative to the positive electrode capacity P) in the end stage of discharge can be reduced. This can suppress the deterioration of the positive electrode in the end stage of discharge, and suppress the degradation in output characteristics (e.g., low-temperature pulse discharge characteristics) due to the above deterioration of the positive electrode. Furthermore, by using a lithium alloy containing Mg in an amount of 0.02 mass% or more as the negative electrode active material, the deposition of the Mn which has leached from the positive electrode during long-term use of the battery on the negative electrode can be suppressed, and the increase in internal resistance (degradation in storage characteristics) resulted from the Mn deposition on the negative electrode can be suppressed. When the N/P ratio is 1 or less, the amount of the positive electrode relative to the negative electrode is large, and the amount of the Mn to leach from the positive electrode during long-term use of the battery will increase. Even in this case, by using the above lithium alloy, the Mn deposition on the negative electrode and the increase in internal resistance (degradation in storage characteristics) resulted therefrom can be sufficiently suppressed.

Note that when the N/P ratio is below 0.85, the voids in the interior of the battery is reduced, to decrease the amount of the electrolyte solution contained in the electrode group, which may cause the output characteristics to degrade in some cases. Furthermore, the amount of the Mn leached from the positive electrode is considerably increased, which may cause the storage characteristics to degrade in some cases even though Mg is added in an amount of 0.02 mass% or more.

When the Mg content in the lithium alloy exceeds 11 mass%, the proportion of Mg in the negative electrode increases, to raise the negative electrode resistance (increase the initial internal resistance), which may cause the output characteristics to degrade in some cases. In this case, the proportion of Li in the negative electrode decreases, and the absolute amount of Li decreases. Consequently, the discharge capacity may be reduced.

If the N/P ratio exceeds 1.00, even though Mg is added in an amount of 0.02% or more, the influence of the deterioration of the positive electrode in the end stage of discharge increases, which may cause the output characteristics to degrade in some cases.

### (N/P Ratio)

From the viewpoint of improving the storage characteristics, an N/P ratio is preferably 0.90 or more. From the viewpoint of improving the output characteristics, the N/P ratio may be less than 1, preferably 0.95 or less. When the N/P ratio is less than 1 or 0.95 or less, a greater amount of Mn will leach from the positive electrode. Therefore, the effect of suppressing the Mn deposition on the negative electrode, which is obtained by using the lithium alloy of the present disclosure, becomes more remarkable.

The positive electrode capacity P is a capacity theoretically determined based on the positive electrode active material amount in the positive electrode, and is calculated by multiplying the mass of the manganese dioxide contained in the positive electrode by the theoretical capacity per 1 g of manganese dioxide (308 mAh).

The mass of the manganese dioxide contained in the positive electrode is the mass of the manganese dioxide packed into the positive electrode in the positive electrode production, and may be calculated as follows. From an undischarged battery (battery before use), the positive electrode is taken out, which is then washed with a nonaqueous solvent (e.g., 1,2-dimethoxyethane), and dried, to remove the nonaqueous electrolyte solution adhering to the positive electrode. The positive electrode mixture is sampled from the positive electrode, to determine its mass M1. The sampled positive electrode mixture is then dissolved in an acid solution, followed by filtration. The residue is washed with water, and dried to determine its mass M2. The mass of (M1 - M2) is calculated as the mass of the manganese dioxide.

The negative electrode capacity N is a capacity theoretically determined based on the negative electrode active material amount (lithium amount) in the negative electrode, and is calculated by multiplying the mass of the lithium contained in the negative electrode by the theoretical capacity per 1 g of lithium (3861 mAh).

The mass of the lithium contained in the negative electrode can be determined as follows.

From an undischarged battery (battery before use), the negative electrode (lithium alloy) is taken out, which is then washed with a nonaqueous solvent (e.g., 1,2-dimethoxyethane), and dried, to remove the nonaqueous electrolyte solution adhering to the negative electrode. The mass of the negative electrode is measured, and then, the negative electrode is dissolved in an acid solution, to measure a lithium content (mass%) in the negative electrode by inductively coupled plasma (ICP) atomic emission spectroscopy. The mass of the lithium contained in the negative electrode is determined based on the measured mass of the negative electrode and the measured lithium content in the negative electrode. The subject to be measured may be a negative electrode (lithium alloy) used in the battery production. When the negative electrode includes a negative electrode current collector supporting a lithium alloy foil, the amount of the lithium contained in the lithium alloy foil may be determined after separating the lithium alloy foil from the negative electrode current collector.

### (Lithium alloy)

The negative electrode includes a lithium alloy, and the lithium alloy contains Mg in an amount of 0.02 to 11 mass%. From the viewpoints of reducing the internal resistance and ensuring the capacity, the Li content in the lithium alloy may be 89 mass% or more, and may be 95 mass% or more.

It is preferable that the lithium alloy contains at least Mg in an amount of 0.02 mass% or more, and further contains Al from the viewpoint of improving the output voltage. Hereinafter, a lithium alloy containing Mg and being substantially free of Al will be sometimes referred to as a "Li-Mg alloy". A lithium alloy containing Mg and Al will be sometimes referred to as a "Li-Mg-Al alloy". Note that "being substantially free of Al" means that the Al amount is below the detection limit in a compositional analysis of the lithium alloy (e.g., ICP atomic emission spectroscopy, atomic absorption spectroscopy, etc.).

When the lithium alloy contains Al, a coating film with low resistance is formed. When the lithium alloy contains Mg and Al, the non-uniform consumption of Li caused by segregation of Al is suppressed. In this case, the effects by Mg and Al are stably obtained throughout the negative electrode, and Li is uniformly consumed on the negative electrode surface, resulting in a higher proportion of Li that can contribute to the discharge reaction in the end stage of discharge.

With a lithium alloy having a Mg content of 0.02 mass% or more, as compared to with a lithium alloy having a Mg content of less than 0.02 mass% or lithium metal, the effect by the addition of Al can be remarkably obtained, and a coating film with low resistance is likely to be formed. The output voltage in the end stage of discharge is more enhanced, and the increase in internal resistance during long-term use can be more suppressed.

From the viewpoint of improving the storage characteristics, the Mg content in the lithium alloy is preferably 0.1 mass% or more, more preferably 0.2 mass% or more, further more preferably 0.3 mass% or more. From the viewpoint of improving the output characteristics, the Mg content in the lithium alloy is preferably 8 mass% or less, more preferably 5 mass% or less, further more preferably 3 mass% or less. The Mg content in the lithium alloy may be, for example, 0.02 mass% or more and 3 mass% or less, and may be 0.3 mass% or more and 3 mass% or less. Note that the above Mg content in the lithium alloy is the Mg content in a Li-Mg alloy or a Li-Mg-Al alloy.

The Al content in the lithium alloy (Li-Mg-Al alloy) is preferably 0.01 mass% or more and 0.5 mass% or less, more preferably 0.01 mass% or more and 0.35 mass% or less. When the Al content is 0.01 mass% or more, the above-mentioned effect by the addition of Al can be easily obtained. When the Al content is 0.5 mass% or less, the negative electrode resistance (internal resistance) can be easily reduced, and the flexibility of the negative electrode can be easily ensured.

The total content of Mg and Al in the Li-Mg-Al alloy may be 0.03 mass% or more and 11.5 mass% or less (or 11 mass% or less), may be 0.2 mass% or more and 5 mass% or less, and may be 0.4 mass% or more and 4 mass% or less. In the case of a Li-Mg-Al alloy, the mass ratio Mg/Al of Mg to Al may be, for example, in the range of 0.02/0.5 (or 0.3/0.5) to 3/0.01.

The lithium alloy may contain other metal elements except Li, Mg, and Al. Examples of other metal elements include Sn, Ni, Pb, In, K, Na, Ca, and Zn. From the viewpoints of ensuring the discharge capacity and stabilizing the internal resistance, the total content of the metal elements except lithium contained in the lithium alloy is preferably 11 mass% or less.

The composition of the lithium alloy can be determined by inductively coupled plasma (ICP) atomic emission spectroscopy or atomic absorption spectroscopy (AAS).

There is no particular limitation on the structure and the shape of the lithium primary battery. The lithium primary battery may include, for example, a wound electrode group constituted by spirally winding a belt-shaped positive electrode and a belt-shaped negative electrode with a separator interposed therebetween. The wound electrode group may be cylindrical or flat in shape. The shape of the lithium primary battery may be cylindrical or prismatic. The cylindrical battery may have a spiral structure or an inside-out structure. The lithium primary battery may be, for example, a coin battery including a stacked electrode group constituted by stacking a disc-shaped positive electrode and a disc-shaped negative electrode with a separator interposed therebetween.

A detailed description will be given below of the lithium primary battery of the present disclosure.

### (Negative electrode)

The negative electrode can include, for example, a lithium alloy in the form of foil (sheet). The lithium alloy can be formed into a desired shape and a desired thickness, according to the type, size, specified performance, and the like of the lithium primary battery.

The negative electrode used in a wound electrode group may be a lithium alloy in the form of foil (sheet) without including a negative electrode current collector, although it may include a negative electrode current collector (e.g., copper foil) supporting a lithium alloy. When the lithium alloy contains Mg, the negative electrode can be constituted by using only a lithium alloy in the form of foil (sheet), without using a negative electrode current collector, because Mg, which has relatively high strength, will remain in the end stage of discharge. By using a lithium alloy containing Mg in an amount of 0.02 mass% or more, the fracture and the partial deficiency of the negative electrode in the end stage of discharge that occur when the negative electrode is without a negative electrode current collector can be suppressed. The shape of the negative electrode (lithium alloy) can be maintained even in the end stage of discharge, and even when not using a negative electrode current collector, the overall conductivity of the negative electrode can be ensured.

When the battery is of a coin type, a hoop-shaped lithium alloy is punched into a disc shape, which can be used as the negative electrode. When the battery is of a cylindrical type, a lithium alloy in the form of sheet may be used as the negative electrode. The sheet can be obtained by, for example, extrusion molding. Specifically, in a cylindrical battery, a lithium alloy foil having a shape with a longitudinal direction and a lateral direction, or the like is used.

### (Positive electrode)

The positive electrode includes manganese dioxide, as a positive electrode active material. As the manganese dioxide, electrolytic manganese dioxide subjected to firing is preferably used. The positive electrode including manganese dioxide exhibits relatively high voltage and is advantageous in terms of improving the discharge characteristics (pulse discharge characteristics). A chemical manganese dioxide may be included. The manganese dioxide may be in a mixed crystal state containing multiple crystalline states.

The positive electrode includes, for example, a belt-shaped positive electrode current collector, and a positive electrode mixture layer held on the positive electrode current collector. The positive electrode mixture layer is formed by, for example, applying or packing a wet-state positive electrode mixture onto a surface of a sheet-shaped positive electrode current collector or into a positive electrode current collector, and applying a pressure thereto in the thickness direction, followed by drying.

The positive electrode mixture may contain a positive electrode active material, a binder, a conductive agent, and the like. Examples of the binder include fluorocarbon resins such as polytetrafluoroethylene, rubber particles, and acrylic resins. Examples of the conductive agent include conductive carbon materials. The conductive carbon materials include, for example, natural graphite, artificial graphite, carbon black, and carbon fibers.

Examples of the material of the positive electrode current collector include stainless steel, aluminum, and titanium. As the positive electrode current collector, a current collector with pores is preferred. Examples of the current collector with pores include expanded metal, net, and punched metal.

When the battery is of a coin type, the positive electrode may be constituted by attaching a ring-like positive electrode current collector whose section is L-shaped, onto a pellet of positive electrode material mixture, or may be constituted of a pellet of positive electrode material mixture only. The pellet of positive electrode material mixture can be obtained by, for example, compression-molding and drying a wet-state positive electrode material mixture prepared by adding an appropriate amount of water to a positive electrode active material and the like.

When the battery is of a cylindrical type having a spiral structure, a positive electrode including a sheet-shaped positive electrode current collector, and a positive electrode material mixture layer held on the positive electrode current collector can be used. As the sheet-shaped positive electrode current collector, a current collector with pores is preferred. Examples of the current collector with pores include an expanded metal, a net, and a punched metal. The positive electrode material mixture layer can be obtained by, for example, applying or packing the above wet-state positive electrode mixture onto a surface of a sheet-shaped positive electrode current collector or into a positive electrode current collector, and applying a pressure thereto in the thickness direction, followed by drying. When the battery is of a cylindrical type having an inside-out structure, a hollow cylindrical pellet of positive electrode mixture can be used as the positive electrode.

### (Nonaqueous electrolyte solution)

The nonaqueous electrolyte solution contains, for example, a nonaqueous solvent, and a lithium salt. The concentration of the lithium ions contained in the nonaqueous electrolyte solution (total concentration of lithium salts) may be, for example, 0.2 mol/L or more and 2.0 mol/L or less, and may be 0.3 mol/L or more and 1.5 mol/L or less.

The nonaqueous solvent may be an organic solvent that can be generally used in the nonaqueous electrolyte solution of a lithium primary battery. Examples of the nonaqueous solvent include an ether, an ester, and a carbonic acid ester. As the nonaqueous solvent, dimethyl ether, γ-butyrolactone, propylene carbonate (PC), ethylene carbonate (EC), dimethyl carbonate, diethyl carbonate, ethyl methyl carbonate, 1,2-dimethoxyethane (DME), 1,2-diethoxyethane, methyl acetate, ethyl acetate, and propyl acetate, and the like can be used. The nonaqueous electrolyte solution may contain these nonaqueous solvent singly or in combination of two or more kinds.

From the viewpoint of improving the discharge characteristics of the lithium primary battery, the nonaqueous solvent preferably contains a cyclic carbonic acid ester whose boiling point is high, and a chain ether which exhibits low viscosity even at low temperatures. The cyclic carbonic acid ester preferably includes at least one selected from the group consisting of PC and EC, of which PC is particularly preferred. The chain ether preferably includes DME.

The lithium salt may be, for example, a lithium salt used as a solute in lithium primary batteries. Examples of such a lithium salt include LiCF₃SO₃, LiClO₄, LiBF₄, LiPF₆, LiRaSO₃, where Ra is a fluorinated alkyl group having 1 to 4 carbon atoms, LiFSO₃, LiN(SO₂Rb)(SO₂Rc), where Rb and Rc are each independently a fluorinated alkyl group having 1 to 4 carbon atoms, LiN(FSO₂)₂, LiN(SO₂CF₃)₂, LiN(SO₂F)(POF₂), LiPO₂F₂, LiB(C₂O₄)₂, and LiBF₂(C₂O₄). In particular, at least one selected from the group consisting of LiCF₃SO₃, LiBF₄, and LiN(FSO₂)₂ is preferred from the viewpoint of the stability against the lithium alloy containing Mg (or Mg and Al). The nonaqueous electrolyte solution may contain these lithium salts singly or in combination of two or more kinds.

The nonaqueous electrolyte solution may further contain other components such as the above additive. Examples of other components except the above additive include propane sultone, propene sultone, ethylene sulfite, 3,2-dioxathiolane-2,2-dioxide, vinylene carbonate, vinylethylene carbonate, fluoroethylene carbonate, adiponitrile, succinonitrile, and succinic anhydride. The other components may be a lithium salt or may be capable of generating lithium ions.

### (Separator)

The lithium primary battery usually includes a separator interposed between the positive electrode and the negative electrode. As the separator, a porous sheet formed of an electrically insulating material having tolerance against the internal environment of the lithium primary battery may be used. Specific examples thereof include a nonwoven fabric made of synthetic resin, a microporous film made of synthetic resin, and a laminate of them.

Examples of the synthetic resin used for the nonwoven fabric include polypropylene, polyphenylene sulfide, and polybutylene terephthalate. Examples of the synthetic resin used for the microporous film include polyolefin resins, such as polyethylene, polypropylene, and ethylene-propylene copolymer. The microporous film may contain inorganic particles, as necessary.

The thickness of the separator is, for example, 5 µm or more and 100 µm or less.

FIG. 1 is a front view, partially in section, of a lithium primary battery according to one embodiment of the present disclosure. FIG. 1 illustrates an example of a lithium primary battery, and the lithium primary battery according to the present disclosure is not limited thereto.

A cylindrical lithium primary battery 10 includes a bottomed cylindrical case 100 (battery can), a wound electrode group 200 housed in the case 100, and a sealing plate 300 closing the opening of the case 100. Examples of the material of the case include stainless steel, nickel-plated steel plate, iron, titanium, and aluminum. The sealing plate 300 is fixed in the vicinity of the opening of the case 100 by welding. An aperture is formed in the center of the sealing plate 300, and an external terminal 330 is disposed at this aperture. An insulating gasket 310 is disposed between the external terminal 330 and the sealing plate 300. The electrode group 200 is housed, together with a nonaqueous electrolyte (not shown), within the case 100. On the upper and lower sides of the electrode group 200, an upper insulating plate 230A and a lower insulating plate 230B are respectively disposed, in order to prevent an internal short circuit.

The electrode group 200 is constituted by spirally winding a belt-shaped positive electrode 201 and a belt-shaped negative electrode 202 with a separator 203 interposed therebetween. A negative electrode lead 210 is connected to the negative electrode 202. The negative electrode lead 210 is connected to the external terminal 330 (negative electrode terminal) by welding or the like. A positive electrode lead 220 is connected to the positive electrode 201. The positive electrode lead 220 is connected to the inner bottom surface of the case 100 by welding or the like.

The negative electrode 202 includes at least a lithium alloy in the form of foil (or in the form of sheet). The lithium alloy contains Mg in an amount of 0.02 to 11 mass%. The ratio N/P of a capacity N of the negative electrode 202 to a capacity P of the positive electrode 201 is 0.85 to 1.00. The positive electrode 201 is disposed at the outermost layer of the electrode group 200.

The external terminal in FIG. 1 is used as a negative electrode terminal, which however, may be used as a positive electrode terminal. That is, the positive electrode lead may be connected to the external terminal, and the negative electrode lead may be connected to the inner bottom surface of the battery case. In FIG. 1, the positive electrode and negative electrode are spirally wound such that the positive electrode is disposed at the outermost layer of the electrode group; however, the positive electrode and negative electrode, may be spirally wound such that the negative electrode is disposed at the outermost layer of the electrode group.

### (Supplementary notes)

The above description of embodiments discloses the following techniques.

### (Technique 1)

A lithium primary battery, comprising:
a positive electrode; a negative electrode; a separator disposed between the positive electrode and the negative electrode; and a nonaqueous electrolyte solution, wherein
the positive electrode includes manganese dioxide,
the negative electrode includes a lithium alloy,
the lithium alloy contains magnesium in an amount of 0.02 mass% or more and 11 mass% or less, and
a ratio of a capacity of the negative electrode to a capacity of the positive electrode is 0.85 or more and 1.00 or less.

### (Technique 2)

The lithium primary battery according to technique 1, wherein
the lithium alloy contains aluminum,
a content of the magnesium in the lithium alloy is 0.02 mass% or more and 3 mass% or less, and
a content of the aluminum in the lithium alloy is 0.01 mass% or more and 0.5 mass% or less.

### (Technique 3)

The lithium primary battery according to technique 1 or 2, wherein the positive electrode having a belt shape and the negative electrode having a belt shape are spirally wound with the separator interposed between the positive electrode and the negative electrode.

### (Technique 4)

The lithium primary battery according to technique 3, wherein the negative electrode is the lithium alloy in a form of foil, without including a negative electrode current collector.

### [Examples]

The present disclosure will be specifically described below with reference to Examples and Comparative Examples. The present disclosure, however, is not limited to the following Examples.

### <<Batteries A1 to A28 and B1 to B50>>

### (Production of negative electrode)

A belt-shaped negative electrode (length 147 mm, width 40 mm) was obtained by cutting a lithium metal foil or a lithium alloy foil. The thickness of the negative electrode of a battery A1 was set to 0.3 mm. The thickness of the negative electrode of each battery except the battery A1 was adjusted as appropriate so that the amount of lithium in the negative electrode was equal to that in the negative electrode of the battery A1. Other elements except Li contained in the lithium alloy foil were Mg and/or Al. As the lithium alloy foil, a Li-Mg alloy foil, a Li-Al alloy foil, or a Li-Mg-Al alloy foil was used. Here, the Li-Al alloy refers to a lithium alloy containing Al and being substantially free of Mg. Being substantially free of Mg means that the Mg amount is below the detection limit in a compositional analysis of the lithium alloy (ICP atomic emission spectroscopy, etc.). The Mg content in the Li-Mg alloy foil was set to the values shown in Tables 1 and 2. The Al content in the Li-Al alloy foil was set to the values shown in Table 3. The Mg content and the Al content in the Li-Mg-Al alloy were set to the values shown in Table 4. In batteries A1 to A16 in Table 2, the Li content in the Li-Mg alloy was 89 mass% or more. In batteries A17 to A28 in Table 4, the Li content in the Li-Mg-Al alloy was 89 mass% or more.

One end of a negative electrode lead made of nickel was connected to the negative electrode at a predetermined location by pressure welding.

### (Production of positive electrode)

To 100 parts by mass of a positive electrode active material, 5 parts by mass of Ketjen black serving as a conductive agent, 5 parts by mass of polytetrafluoroethylene serving as a binder, and an appropriate amount of pure water were added and kneaded together, to prepare a wet-state positive electrode mixture. The positive electrode active material used here was electrolytic manganese dioxide (MnO₂) subjected to firing at 400 °C for 5 hours.

Next, the positive electrode mixture was packed into a positive electrode current collector formed of an expanded metal (height 0.2 mm) made of stainless steel, to prepare a positive electrode precursor. Thereafter, the positive electrode precursor was dried, and rolled with a roll press, followed by cutting into a belt-shaped positive electrode (length 185 mm, width 42 mm). The active material density in the positive electrode was set to 2.7 g/cm³. Subsequently, a part of the packed positive electrode mixture was peeled off, and one end of a positive electrode lead made of stainless steel was resistance-welded to the exposed part of the positive electrode current collector.

With the negative electrode capacity N fixed, the positive electrode capacity P was adjusted, to set the N/P ratio to the values shown in Tables 1 to 4. The positive electrode capacity P was adjusted by changing the thickness of the positive electrode (the amount of positive electrode mixture packed into the positive electrode current collector). The opposing area between the negative electrode and the positive electrode was fixed. The N/P ratio was calculated using the negative electrode capacity N and the positive electrode capacity P which were determined by the already-described method.

### (Formation of electrode group)

An electrode group was formed by winding the positive electrode and the negative electrode, with a separator interposed therebetween. The positive electrode was disposed at the outermost layer of the electrode group. The separator used here was a 25-µm-thick microporous film made of polypropylene.

### (Preparation of nonaqueous electrolyte solution)

LiCF₃SO₃ was dissolved at a concentration of 0.6 mol/L in a mixed solvent of propylene carbonate (PC), ethylene carbonate (EC), and 1,2-dimethoxyethane (DME) (volume ratio 25:25:50).

### (Fabrication of lithium primary battery)

The electrode group was housed in a bottomed cylindrical case (outer diameter 17.5 mm, height 50.5 mm) made of stainless steel, also serving as a positive electrode terminal. At this time, an upper insulating plate and a lower insulating plate were disposed, respectively, on the upper end face and the lower end face of the electrode group. The other end of the positive electrode lead was connected to the inner surface at the bottom of the case by resistance welding. A sealing plate provided with an external terminal (negative electrode terminal) was prepared. A gasket was interposed between the sealing plate and the external terminal. The other end of the negative electrode lead was connected to the external terminal by resistance welding. After injecting the nonaqueous electrolyte solution into the battery case, the opening end portion of the case and the peripheral portion of the sealing plate were laser-welded to each other, to seal the opening of the case with the sealing plate. In this way, a lithium primary battery (battery A1) having a structure as illustrated in FIG. 1 was fabricated. With respect to the battery immediately after fabrication, aging was performed for 7 days in a 45 °C atmosphere. Note that A1 to A28 in the tables are batteries of Examples. B1 to B50 are batteries of Comparative Examples.

With respect to each of the obtained batteries, the following evaluation was performed.

### [Evaluation]

### (Pulse discharge characteristics (output characteristics))

With respect to the aged battery, in a 23±2 °C environment, a constant-current discharge was performed at 20 mA until the depth of discharge (DOD) reached 80% (until the discharged quantity of electricity reached 80% of the negative electrode capacity). The battery with 80% DOD was left to stand in a -40°C environment for 4 hours or more, and then, subjected to a pulse-discharge at 150 mA for 5 seconds in a -40 °C environment, to determine the lowest voltage at this time. When the lowest voltage was 2 V or more, the pulse discharge characteristics (output characteristics) were judged as favorable.

### (Storage characteristics)

With a 100 kΩ load connected to the battery subjected to the pulse discharge, in a 60 °C environment, the internal resistance was measured every after 5 days, to determine a storage period until the internal resistance reached 0.5 Ω. When the storage period was 100 days or longer, the storage characteristics were judged as favorable.

The evaluation results are shown in Tables 1 to 4. In Table 3, the results for B1 to B6 in Table 1 are also shown. In Table 4, the results for A5 to A8 and B21 to B22 in Table 2 are also shown.

**[Table 1]**

| battery | negative electrode active material | | | positive electrode active material | N/P ratio | pulse discharge characteristics (V) | storage characteristics (day) |
|---|---|---|---|---|---|---|---|
| | foil composition | Mg content (mass%) | Al content (mass%) | | | | |
| B1 | Li metal | - | - | MnO₂ | 0.84 | 1.30 | 65 |
| B2 | Li metal | - | - | MnO₂ | 0.85 | 1.50 | 70 |
| B3 | Li metal | - | - | MnO₂ | 0.90 | 1.65 | 75 |
| B4 | Li metal | - | - | MnO₂ | 0.95 | 1.82 | 80 |
| B5 | Li metal | - | - | MnO₂ | 1.00 | 1.90 | 85 |
| B6 | Li metal | - | - | MnO₂ | 1.01 | 1.86 | 85 |
| B7 | Li-Mg alloy | 0.01 | - | MnO₂ | 0.84 | 1.30 | 65 |
| B8 | Li-Mg alloy | 0.01 | - | MnO₂ | 0.85 | 1.50 | 70 |
| B9 | Li-Mg alloy | 0.01 | - | MnO₂ | 0.90 | 1.65 | 75 |
| B10 | Li-Mg alloy | 0.01 | - | MnO₂ | 0.95 | 1.85 | 80 |
| B11 | Li-Mg alloy | 0.01 | - | MnO₂ | 1.00 | 1.90 | 90 |
| B12 | Li-Mg alloy | 0.01 | - | MnO₂ | 1.01 | 1.86 | 90 |
| B13 | Li-Mg alloy | 12 | - | MnO₂ | 0.84 | 1.30 | 65 |
| B14 | Li-Mg alloy | 12 | - | MnO₂ | 0.85 | 1.97 | 70 |
| B15 | Li-Mg alloy | 12 | - | MnO₂ | 0.90 | 1.95 | 75 |
| B16 | Li-Mg alloy | 12 | - | MnO₂ | 0.95 | 1.93 | 80 |
| B17 | Li-Mg alloy | 12 | - | MnO₂ | 1.00 | 1.92 | 85 |
| B18 | Li-Mg alloy | 12 | - | MnO₂ | 1.01 | 1.90 | 85 |

**[Table 2]**

| battery | negative electrode active material | | | positive electrode active material | N/P ratio | pulse discharge characteristics (V) | storage characteristics (day) |
|---|---|---|---|---|---|---|---|
| | foil composition | Mg content (mass%) | Al content (mass%) | | | | |
| B19 | Li-Mg alloy | 0.02 | - | MnO₂ | 0.84 | 1.32 | 85 |
| A1 | Li-Mg alloy | 0.02 | - | MnO₂ | 0.85 | 2.14 | 105 |
| A2 | Li-Mg alloy | 0.02 | - | MnO₂ | 0.90 | 2.10 | 115 |
| A3 | Li-Mg alloy | 0.02 | - | MnO₂ | 0.95 | 2.05 | 115 |
| A4 | Li-Mg alloy | 0.02 | - | MnO₂ | 1.00 | 2.02 | 120 |
| B20 | Li-Mg alloy | 0.02 | - | MnO₂ | 1.01 | 1.96 | 125 |
| B21 | Li-Mg alloy | 0.3 | - | MnO₂ | 0.84 | 1.36 | 85 |
| A5 | Li-Mg alloy | 0.3 | - | MnO₂ | 0.85 | 2.23 | 110 |
| A6 | Li-Mg alloy | 0.3 | - | MnO₂ | 0.90 | 2.21 | 120 |
| A7 | Li-Mg alloy | 0.3 | - | MnO₂ | 0.95 | 2.13 | 125 |
| A8 | Li-Mg alloy | 0.3 | - | MnO₂ | 1.00 | 2.04 | 130 |
| B22 | Li-Mg alloy | 0.3 | - | MnO₂ | 1.01 | 1.98 | 130 |
| B23 | Li-Mg alloy | 3 | - | MnO₂ | 0.84 | 1.36 | 85 |
| A9 | Li-Mg alloy | 3 | - | MnO₂ | 0.85 | 2.21 | 115 |
| A10 | Li-Mg alloy | 3 | - | MnO₂ | 0.90 | 2.18 | 120 |
| A11 | Li-Mg alloy | 3 | - | MnO₂ | 0.95 | 2.11 | 125 |
| A12 | Li-Mg alloy | 3 | - | MnO₂ | 1.00 | 2.04 | 130 |
| B24 | Li-Mg alloy | 3 | - | MnO₂ | 1.01 | 1.98 | 130 |
| B25 | Li-Mg alloy | 11 | - | MnO₂ | 0.84 | 1.31 | 75 |
| A13 | Li-Mg alloy | 11 | - | MnO₂ | 0.85 | 2.14 | 105 |
| A14 | Li-Mg alloy | 11 | - | MnO₂ | 0.90 | 2.12 | 115 |
| A15 | Li-Mg alloy | 11 | - | MnO₂ | 0.95 | 2.04 | 115 |
| A16 | Li-Mg alloy | 11 | - | MnO₂ | 1.00 | 2.01 | 115 |
| B26 | Li-Mg alloy | 11 | - | MnO₂ | 1.01 | 1.96 | 120 |

**[Table 3]**

| battery | negative electrode active material | | | positive electrode active material | N/P ratio | pulse discharge characteristics (V) | storage characteristics (day) |
|---|---|---|---|---|---|---|---|
| | foil composition | Mg content (mass%) | Al content (mass%) | | | | |
| B1 | Li metal | - | - | MnO₂ | 0.84 | 1.30 | 65 |
| B2 | Li metal | - | - | MnO₂ | 0.85 | 1.50 | 70 |
| B3 | Li metal | - | - | MnO₂ | 0.90 | 1.65 | 75 |
| B4 | Li metal | - | - | MnO₂ | 0.95 | 1.82 | 80 |
| B5 | Li metal | - | - | MnO₂ | 1.00 | 1.90 | 85 |
| B6 | Li metal | - | - | MnO₂ | 1.01 | 1.86 | 85 |
| B27 | Li-Al alloy | - | 0.01 | MnO₂ | 0.84 | 1.30 | 65 |
| B28 | Li-Al alloy | - | 0.01 | MnO₂ | 0.85 | 1.50 | 75 |
| B29 | Li-Al alloy | - | 0.01 | MnO₂ | 0.90 | 1.65 | 80 |
| B30 | Li-Al alloy | - | 0.01 | MnO₂ | 0.95 | 1.85 | 80 |
| B31 | Li-Al alloy | - | 0.01 | MnO₂ | 1.00 | 1.90 | 90 |
| B32 | Li-Al alloy | - | 0.01 | MnO₂ | 1.01 | 1.86 | 90 |
| B33 | Li-Al alloy | - | 0.2 | MnO₂ | 0.84 | 1.30 | 70 |
| B34 | Li-Al alloy | - | 0.2 | MnO₂ | 0.85 | 1.55 | 75 |
| B35 | Li-Al alloy | - | 0.2 | MnO₂ | 0.90 | 1.68 | 80 |
| B36 | Li-Al alloy | - | 0.2 | MnO₂ | 0.95 | 1.87 | 85 |
| B37 | Li-Al alloy | - | 0.2 | MnO₂ | 1.00 | 1.93 | 95 |
| B38 | Li-Al alloy | - | 0.2 | MnO₂ | 1.01 | 1.89 | 95 |
| B39 | Li-Al alloy | - | 0.5 | MnO₂ | 0.84 | 1.30 | 65 |
| B40 | Li-Al alloy | - | 0.5 | MnO₂ | 0.85 | 1.55 | 70 |
| B41 | Li-Al alloy | - | 0.5 | MnO₂ | 0.90 | 1.70 | 75 |
| B42 | Li-Al alloy | - | 0.5 | MnO₂ | 0.95 | 1.88 | 80 |
| B43 | Li-Al alloy | - | 0.5 | MnO₂ | 1.00 | 1.92 | 90 |
| B44 | Li-Al alloy | - | 0.5 | MnO₂ | 1.01 | 1.87 | 95 |

**[Table 4]**

| battery | negative electrode active material | | | positive electrode active material | N/P ratio | pulse discharge characteristics (V) | storage characteristics (day) |
|---|---|---|---|---|---|---|---|
| | foil composition | Mg content (mass%) | Al content (mass%) | | | | |
| B21 | Li-Mg alloy | 0.3 | - | MnO₂ | 0.84 | 1.36 | 85 |
| A5 | Li-Mg alloy | 0.3 | - | MnO₂ | 0.85 | 2.23 | 110 |
| A6 | Li-Mg alloy | 0.3 | - | MnO₂ | 0.90 | 2.21 | 120 |
| A7 | Li-Mg alloy | 0.3 | - | MnO₂ | 0.95 | 2.13 | 125 |
| A8 | Li-Mg alloy | 0.3 | - | MnO₂ | 1.00 | 2.04 | 130 |
| B22 | Li-Mg alloy | 0.3 | - | MnO₂ | 1.01 | 1.98 | 130 |
| B45 | Li-Mg-Al alloy | 0.3 | 0.01 | MnO₂ | 0.84 | 1.36 | 95 |
| A17 | Li-Mg-Al alloy | 0.3 | 0.01 | MnO₂ | 0.85 | 2.35 | 120 |
| A18 | Li-Mg-Al alloy | 0.3 | 0.01 | MnO₂ | 0.90 | 2.34 | 130 |
| A19 | Li-Mg-Al alloy | 0.3 | 0.01 | MnO₂ | 0.95 | 2.23 | 145 |
| A20 | Li-Mg-Al alloy | 0.3 | 0.01 | MnO₂ | 1.00 | 2.13 | 155 |
| B46 | Li-Mg-Al alloy | 0.3 | 0.01 | MnO₂ | 1.01 | 1.98 | 155 |
| B47 | Li-Mg-Al alloy | 0.3 | 0.2 | MnO₂ | 0.84 | 1.36 | 95 |
| A21 | Li-Mg-Al alloy | 0.3 | 0.2 | MnO₂ | 0.85 | 2.37 | 125 |
| A22 | Li-Mg-Al alloy | 0.3 | 0.2 | MnO₂ | 0.90 | 2.33 | 135 |
| A23 | Li-Mg-Al alloy | 0.3 | 0.2 | MnO₂ | 0.95 | 2.25 | 145 |
| A24 | Li-Mg-Al alloy | 0.3 | 0.2 | MnO₂ | 1.00 | 2.15 | 155 |
| B48 | Li-Mg-Al alloy | 0.3 | 0.2 | MnO₂ | 1.01 | 1.98 | 155 |
| B49 | Li-Mg-Al alloy | 0.3 | 0.5 | MnO₂ | 0.84 | 1.36 | 95 |
| A25 | Li-Mg-Al alloy | 0.3 | 0.5 | MnO₂ | 0.85 | 2.32 | 115 |
| A26 | Li-Mg-Al alloy | 0.3 | 0.5 | MnO₂ | 0.90 | 2.30 | 125 |
| A27 | Li-Mg-Al alloy | 0.3 | 0.5 | MnO₂ | 0.95 | 2.21 | 135 |
| A28 | Li-Mg-Al alloy | 0.3 | 0.5 | MnO₂ | 1.00 | 2.10 | 145 |
| B50 | Li-Mg-Al alloy | 0.3 | 0.5 | MnO₂ | 1.01 | 1.98 | 155 |

When the Mg content in the lithium alloy was 0.02 to 11 mass%, and the N/P ratio was 0.85 to 1, excellent output characteristics and storage characteristics were both obtained (A1 to A28). In particular, when the Mg content was 0.02 to 3 mass%, the Al content was 0.01 to 0.5 mass%, and the N/P ratio was 0.85 to 1, the output characteristics and the storage characteristics were further improved (A17 to A28). Note that regarding the Li-Mg-Al alloy of the present Examples (Table 4), examples of the Mg content being 0.3 mass% are shown; however, similar effects to those as obtained in the present Examples can be obtained with the Mg content being in the range of 0.02 to 11 mass% (preferably 0.02 to 3 mass%).

As shown in Table 3, when the N/P ratio was 0.85 to 1 and no Mg was added, the improvement in output characteristics and storage characteristics by the addition of Al was barely observed, or the width of improvement was very small (B2 to B5 → B28 to B31, B34 to B37, B40 to B43). On the other hand, as shown in Table 4, when the N/P ratio was 0.85 to 1, and the Mg content was 0.02 mass% or more, the output characteristics and the storage characteristics were significantly improved by the addition of Al (A5 to A8 → A17 to A20, A21 to A24, and A25 to A28). The foregoing shows that the improvement effect in output and storage characteristics by the addition of Al is remarkable when the lithium alloy contains Mg.

When the N/P ratio was less than 0.85, the thickness of the positive electrode increased, the remaining space in the interior of the battery was reduced, and the amount of the electrolyte solution contained in the electrode group decreased, which resulted in degradation in output characteristics. When the N/P ratio exceeded 1, the depth of discharge of the positive electrode in the end stage of discharge increased, and the internal resistance increased due to the deterioration of the positive electrode, which resulted in degradation in output characteristics. When the N/P ratio was less than 0.85, despite adding Mg in an amount of 0.02 mass% or more, the amount of the Mn leached from the positive electrode increased, which resulted in degradation in output characteristics.

In the case of using a Li metal foil, a Li-Mg alloy foil having a Mg content of less than 0.02 mass%, or a Li-Al alloy foil, due to the failure of suppressing the Mn deposition on the negative electrode, the storage characteristics were degraded. In the case where the negative electrode was a Li metal foil, a Li-Mg alloy foil having a Mg content of less than 0.02 mass%, or a Li-Al alloy foil, and was without including a negative electrode current collector, when the N/P ratio was reduced, foil breakage tended to occur in the end stage of discharge, and the output characteristics were degraded. In the case where the Mg content exceeded 11 mass%, the negative electrode resistance (initial internal resistance) increased, and the output characteristics and the storage characteristics were degraded.

### [Industrial Applicability]

The lithium primary battery of the present disclosure is suitably applicable, for example, as a main power source for various meters (e.g., smart meters for electricity, water, gas, etc.) and a memory backup power source.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: lithium primary battery, 100: case, 200: electrode group, 201: positive electrode, 202: negative electrode, 203: separator, 210: negative electrode lead, 220: positive electrode lead, 230A: upper insulating plate, 230B: lower insulating plate, 300: sealing plate, 310: gasket, 330: external terminal

## Claims

1. A lithium primary battery, comprising:
a positive electrode; a negative electrode; a separator disposed between the positive electrode and the negative electrode; and a nonaqueous electrolyte solution, wherein
the positive electrode includes manganese dioxide,
the negative electrode includes a lithium alloy,
the lithium alloy contains magnesium in an amount of 0.02 mass% or more and 11 mass% or less, and
a ratio N/P of a capacity N of the negative electrode to a capacity P of the positive electrode is 0.85 or more and 1.00 or less.

2. The lithium primary battery according to claim 1, wherein
the lithium alloy contains aluminum,
a content of the magnesium in the lithium alloy is 0.02 mass% or more and 3 mass% or less, and
a content of the aluminum in the lithium alloy is 0.01 mass% or more and 0.5 mass% or less.

3. The lithium primary battery according to claim 1, wherein the positive electrode having a belt shape and the negative electrode having a belt shape are spirally wound with the separator interposed between the positive electrode and the negative electrode.

4. The lithium primary battery according to claim 3, wherein the negative electrode is the lithium alloy in a form of foil, without including a negative electrode current collector.
